# EUROPEAN PATENT SPECIFICATION

(11) **EP 2 579 726 B1**
(45) Date of publication and mention of the grant of the patent: **18.06.2014**
(21) Application number: 11726217.0
(22) Date of filing: 08.06.2011
(51) Int. Cl.: A21C 1/06, B01F 7/00

(54) **DEVICE FOR KNEADING FOODSTUFFS**
VORRICHTUNG ZUM KNETEN VON LEBENSMITTELN
DISPOSITIF POUR MALAXER DES PRODUITS ALIMENTAIRES

(30) Priority: 11.06.2010 NL 2004875
(43) Date of publication of application: 17.04.2013
(73) Proprietor: Sobatech B.V., 6222 NJ Maastricht (NL)
(72) Inventor: LEKNER, Gilis Anne Maria Victor, NL-6325 AM Berg En Terblijt (NL); VAN PRAAG, Marinus Arie, NL-6241 NN Bunde (NL); WILLEMS, Ivo Hubertus Anna, NL-6224 LH Maastricht (NL)
(74) Representative: Algemeen Octrooi- en Merkenbureau B.V.
(86) International application number: PCT/NL2011/050409
(87) International publication number: WO 2011/155831

(56) References cited:
- NL-C2- 1 029 273

## Description

The invention relates to a device for kneading foodstuffs, which device comprises a container having a container wall, which container comprises at least one rotary shaft extending substantially in the longitudinal direction of the container, an inlet located at a first side of the rotary shaft, through which inlet the foodstuffs to be kneaded can be introduced into the container, as well as an outlet located at the opposite side of the shaft, spaced from the inlet, through which outlet the kneaded foodstuffs can be discharged from the container, which shaft comprises at least one tool provided with at least one kneading element that helically surrounds the shaft, which kneading element is fixed to the shaft via spacers, whilst the kneading element that helically surrounds the shaft extends over a virtual shell of a virtual cylinder.

Such a device is known from NL-1,029,273. The device disclosed therein can be used as a mixer or a kneader or as a mixer and a kneader. If the bar that helically surrounds the shaft has a relatively large pitch and a relatively small number of spacers are used, the tool described in said patent specification will have a kneading function rather than a mixing function.

The object of the present invention is to provide a device that provides an improved kneading function.

This object is accomplished with the device according to claim 1, having a virtual tangent line includes a constant angle ranging between 0.5 and 10 degrees with the shaft at a random position on the kneading element.

If the kneading element includes such a small constant angle of 0.5 - 10 degrees with the shaft along its entire length, the space between the kneading element and the wall of the container in which the mixture / dough product is present in use will gradually increase or decrease, as a result of which the frictional forces between the tool and the container wall will be optimized in use and the foodstuffs will be kneaded more intensively. Shearing forces in the dough product are maximized when using a kneading element having such a configuration, thereby optimizing the amount of energy introduced into the dough. As a result, a device for a specific capacity will be more compact than a conventional device for the same capacity. Said compactness translates substantially into a relatively limited length dimension of the device. Because of its compact dimensions, less space is required in factory buildings, which is more cost-effective for the user. The device according to the invention is in particular suitable for kneading relatively pasty masses, for example chocolate.

According to the invention the kneading element is made up of a bar having a diameter which is larger than or equal to 1/4 of the diameter of the shaft.

Normally, a kneading element in the form of a bar has a relatively small diameter in relation to the shaft, for example 1/10 of the diameter of the shaft. By using relatively many spacers in the kneading device according to the present invention, it is possible to use a bar which has a relatively large diameter in relation to the shaft, i.e. at least 1/4 of the diameter of the shaft. A bar diameter that large provides an enlarged kneading surface, as a result of which the shearing forces acting on the foodstuffs to be kneaded can be increased in use. In this way the foodstuffs can be kneaded more quickly and, in addition, the length of the device can be reduced whilst the capacity remains the same. Preferably, the bar has a diameter which approximately equals ½ the diameter of the shaft. For kneading, the bar diameter will be at most 3 times the shaft diameter, since a bar having an even larger diameter will be loaded too strongly during kneading.

The term "bar" is not by definition understood to mean a bar having a fully circular section. Is also possible to use a bar having an ellipsoid section or a bar having an asymmetrical shape. When a bar having such shapes different from a circular shape is used, the side of the bar that faces the container wall must however constitute the largest surface, which in addition is also provided with a curvature, seen in sectional view. When such shapes are used, the term "diameter" as described in claim 2 is understood to mean the (virtual) diameter of the curvature of the surface facing the container wall.

Another embodiment of the device according to the present invention is characterised in that the length of the spacers is equal to or smaller than the diameter of the helical bar and also equal to or larger than half the diameter of the helical bar.

The space between the shaft and the kneading element is required for the transport of the foodstuffs from the inlet to the outlet. By keeping said space relatively small, which is done by using spacers having a limited length, the transport function will be maintained and the forces exerted on the spacers in use will be minimal. In addition, the device will be relatively compact when such minimum dimensions of the spacers are used.

According to the invention, the spacing between the container wall and the virtual cylinder defined by the kneading element is equal to or less than half the diameter of the bar.

This prescribed spacing, too, makes it possible to realise a device which on the one hand is compact in size and in which on the other hand the shearing forces acting on the foodstuffs for kneading the same will be maximal in use.

The invention will now be explained in more detail with reference to the appended figures, in which:
Figures 1a-b show a perspective view and sectional view of a device according to the present invention;
Figures 2a-b show a schematic side view and top plan view of a device according to the present invention;
Figure 3 shows a schematic view of a variant of a kneading element not forming part of the present invention.

Like parts are indicated by the same numerals in the various figures.

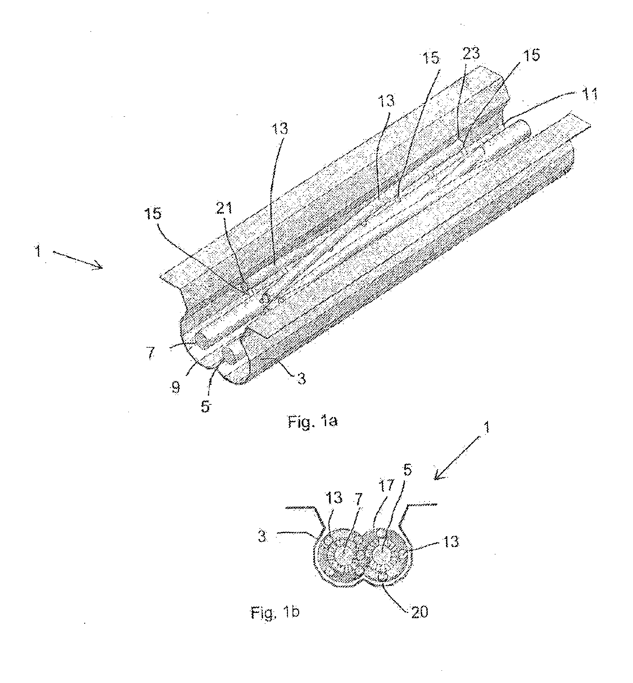

In figure 1 there is shown a part of a device for kneading foodstuffs. Such a part can form part of a device as for example shown in figure 1a of NL-1,029,273. The device according to the present invention is provided with a container 1 comprising a container wall 3, which container comprises two rotary shafts 5, 7 extending substantially in the longitudinal direction of the container 1. The device further comprises an inlet (not shown) located at an upper side of the rotary shafts, through which the foodstuffs to be kneaded can be introduced into the container 1. The inlet will be located near a first end 9 of the container 1. At the bottom side of the shaft, spaced from the inlet, an outlet (not shown) is located near a second end 11 of the container 1, through which outlet the kneaded foodstuffs can be discharged from the container. Such a configuration of the inlet and outlet renders the device according to the present invention highly suitable for carrying out a continuous kneading process.

The shafts 5, 7 comprise a kneading tool, which is provided with bar-shaped kneading elements 13 that helically surround the shafts 5, 7, which are fixed to the shafts 5, 7 via spacers 15. Each kneading element helically surrounding the shaft extends over a virtual shell 17 (see figure 1 b) of a virtual cylinder.

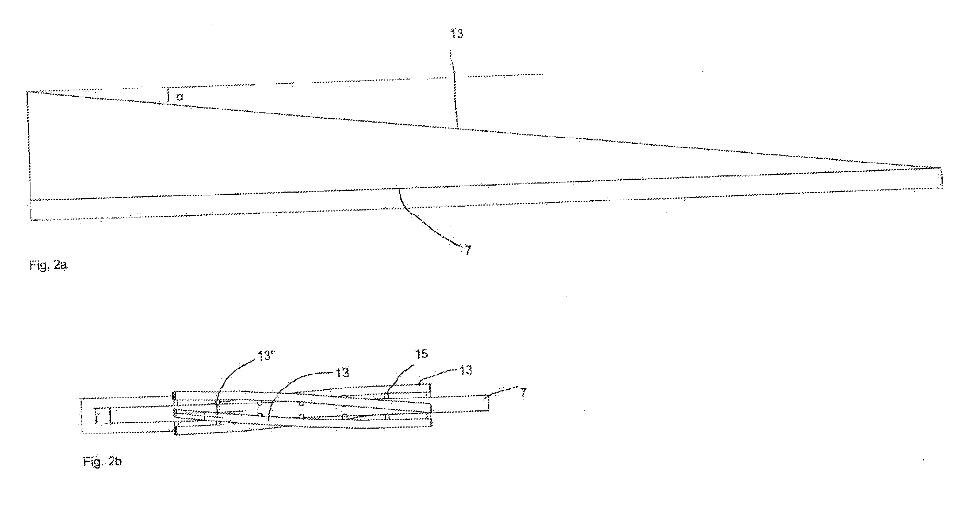

Figures 2a and 2b schematically show a virtual tangent line 13'. It is a feature of a helix that it has a constant radius and a constant pitch. Consequently, a virtual tangent, also called tangent line, includes a constant angle α at any position on the kneading element 12. Said angle α is schematically shown in figures 2a and 2b. It has been found that a small angle, i.e. the virtual tangent line 13' may include a constant angle not exceeding 10 degrees with the shaft at a random position on the kneading element, has very advantageous effects on the foodstuffs that are kneaded in the container 1. In the illustrated embodiment, the angle α is 6.7 degrees. Because such a small angle α is used, the space 20 (see figure 1b) between the kneading element 13 and the wall 3 of the container in which the dough product to be kneaded is present in use gradually decreases, as a result of which the frictional forces between the kneading element 13 and the container wall 3 are optimized in use and the foodstuffs are kneaded more intensively. Shearing forces in the dough product are maximised in use when a thus configured kneading element 13 is used, so that the amount of energy that is introduced into the dough is optimised. This makes it possible to use a container 1, and thus a device, of more compact construction for a specific capacity than a conventional device for the same capacity. The best kneading results are obtained if the angle α ranges between 3 and 7 degrees.

In the embodiment shown in figures 1 and 2, the kneading element 13 is formed by a bar 13 having a diameter which is approximately equal to ½ the diameter of the shaft 5, 7. By using said relatively thick bars 13, the kneading surface of each bar 13 is significantly increased, as a result of which the kneading intensity of the container 1 / device per linear metre is significantly increased. The diameter of the bar 13 is about 20 mm. Each shaft comprises four bars 13, which bars each include an angle of 90° with the adjacent bars.

The length of the spacers 15 is furthermore approximately equal to the diameter of the helically bar 13. Said dimension is relatively small, making it possible to absorb the enormous kneading forces being exerted during use of the device and preventing the tool from bending in the long run after intensive use.

Furthermore, the distance 20 between the container wall 3 and the virtual cylinder defined by the kneading element amounts to approximately half the diameter of the bar 13. By using such a relatively small distance a compact space is provided, such that the forces exerted on the foodstuffs to be kneaded in use will be maximal and the foodstuffs will be kneaded intensively.

The length of the virtual cylinder which extends between the beginning 21 of each bar 13 and which terminates at the end of 23 of each bar 13 ranges between 0.5 m and 5 m.

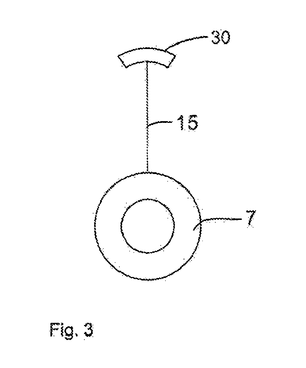

Figure 3 shows an alternative embodiment, not forming part of the invention, of the bar-shaped kneading element 13. The kneading element 30 is a bent plate-shaped element 30 which, seen in sectional view, is at least partially circular in shape, the diameter of said circular shape being equal to or larger than the diameter of the shaft 7. In this way it is also possible to provide a larger kneading surface, which strongly increases the kneading capacity of the container per linear metre.

The enlarged kneading surfaces of the kneading tool as shown in the appended figures can be used advantageously, independently of the angle α of the tool, for realising an improved kneading effect of the device.

Optionally, the shaft 5, 7 may be provided with a second tool (not shown) provided with a mixing element helically surrounding the shaft, which is disposed between the inlet and the outlet, upstream of the aforementioned kneading tool.

Depending on the application, it is also possible, of course, to use less than four bars 13, for example two bars, for each shaft 5, 7. In the case of the bar-shaped kneading elements, however, preferably at least four and at most six bars 13 are to be used for obtaining good kneading characteristics.

Instead of using two circularly bent plate-shaped elements 30 for each shaft 5, 7, as shown in figure 3, it is in principle also possible to use more than two, for example four, bent plate-shaped elements 30 for each shaft 5, 7. In practice it has been found, however, that it is normally not necessary to use more than two bent plate-shaped kneading elements 30, because for most applications excellent kneading characteristics are already realised when using two kneading elements 30. For certain applications even a single plate-shaped kneading element 30 will suffice. This is possible with the bent plate-shaped kneading elements 30, because of the large outwardly facing kneading surface thereof.

## Claims

1. A device for kneading foodstuffs, which device comprises a container (1) having a container wall (3), which container comprises at least one rotary shaft (5, 7) extending substantially in the longitudinal direction of the container, an inlet located at a first side of the rotary shaft (5, 7), through which inlet the foodstuffs to be kneaded can be introduced into the container, as well as an outlet located at the opposite side of the shaft (5, 7), spaced from the inlet, through which outlet the kneaded foodstuffs can be discharged from the container (1), which shaft comprises at least one tool provided with at least one kneading element (13) that helically surrounds the shaft, which kneading element (13) is fixed to the shaft via spacers (15), whilst the kneading element that helically surrounds the shaft extends over a virtual shell (17) of a virtual cylinder, wherein a virtual tangent line includes a constant angle (α) ranging between 0.5 and 10 degrees with the shaft at a random position on the kneading element, **characterised in that** the kneading element (13) is made up of a bar (13) having a diameter which is larger than or equal to 1/4 of the diameter of the shaft(5, 7), and **in that** the spacing between the container wall (1) and the virtual cylinder defined by the kneading element (13) is equal to or less than half the diameter of the bar (13).

2. A device according to claim 1, **characterised in that** the bar (13) has a diameter which approximately equals ½ the diameter of the shaft (5, 7).

3. A device according to any one of the preceding claims, **characterised in that** the length of the spacers (15) is equal to or smaller than the diameter of the helical bar and also equal to or larger than halt the diameter of the helical bar (13).

4. A device according to any one of the preceding claims, **characterised in that** the length of the virtual cylinder ranges between 0.5 m and 5

5. A device according to any one of the preceding claims, characterlsed in that the diameter of the bar (13) is at least 15 mm.

6. A device according to any one of the preceding claims, **characterised in that** the device is arranged to be operable in a continuous process in use.

7. A device according to any one of the preceding claims, **characterised in that** the shaft is provided with a second tool provided with a mixing element that helically surrounds the shaft, which second tool is disposed between the inlet and the outlet, upstream of the aforementioned kneading tool (13), which second tool is fixed to the shaft via spacers, wherein the helical mixing element extends over a virtual shell of a virtual cylinder, wherein a virtual tangent line includes an angle of more than 45 degrees with the shaft at a random position on the helical mixing element.

## Patentansprüche

1. Vorrichtung zum Kneten von Lebensmitteln, wobei die Vorrichtung einen Behälter (1) mit einer Behälterwand (3) umfasst, wobei der Behälter wenigstens eine Drehwelle (5, 7), die sich im Wesentlichen in Längsrichtung des Behälters erstreckt, einen an einer ersten Seite der Drehwelle (5, 7) gelegenen Einlass, durch den die zu knetenden Lebensmittel in den Behälter eingeführt werden können, sowie einen an der entgegengesetzten Seite der Welle (5, 7) vom Einlass beabstandet gelegenen Auslass umfasst, durch den die gekneteten Lebensmittel aus dem Behälter (1) abgeführt werden können, wobei die Welle wenigstens ein Werkzeug umfasst, das mit wenigstens einem Knetelement (13) versehen ist, das die Welle schraubenförmig umgibt, wobei das Knetelement (13) über Abstandshalter (15) an der Welle befestigt ist, während das die Welle schraubenförmig umgebende Knetelement sich über eine virtuelle Mantelfläche (17) eines virtuellen Zylinders erstreckt, wobei eine virtuelle Tangente an einer willkürlichen Position auf dem Knetelement einen konstanten Winkel (α) im Bereich zwischen 0,5 und 10° mit der Welle einschließt, **dadurch gekennzeichnet, dass** das Knetelement (13) aus einer Stange (13) mit einem Durchmesser besteht, der größer oder gleich 1/4 des Durchmessers der Welle (5, 7) ist, und dass der Abstand zwischen der Behälterwand (1) und dem von dem Knetelement (13) definierten virtuellen Zylinder kleiner oder gleich der Hälfte des Durchmessers der Stange (13) ist.

2. Vorrichtung nach Anspruch 1, **dadurch gekennzeichnet, dass** die Stange (13) einen Durchmesser hat, der annähernd gleich 1/2 des Durchmessers der Welle (5, 7) ist.

3. Vorrichtung nach einem der vorhergehenden Ansprüche, **dadurch gekennzeichnet, dass** die Länge der Abstandshalter (15) kleiner oder gleich dem Durchmesser der schraubenförmigen Stange und auch größer oder gleich der Hälfte des Durchmessers der schraubenförmigen Stange (13) ist.

4. Vorrichtung nach einem der vorhergehenden Ansprüche, **dadurch gekennzeichnet, dass** die Länge des virtuellen Zylinders im Bereich zwischen 0,5 m und 5 m liegt.

5. Vorrichtung nach einem der vorhergehenden Ansprüche, **dadurch gekennzeichnet, dass** der Durchmesser der Stange (13) mindestens 15 mm beträgt.

6. Vorrichtung nach einem der vorhergehenden Ansprüche, **dadurch gekennzeichnet, dass** die Vorrichtung so eingerichtet ist, dass sie im Gebrauch in einem Durchlaufverfahren betrieben werden kann.

7. Vorrichtung nach einem der vorhergehenden Ansprüche, **dadurch gekennzeichnet, dass** die Welle mit einem zweiten Werkzeug versehen ist, das mit einem Mischelement versehen ist, das die Welle schraubenförmig umgibt, wobei das zweite Werkzeug zwischen dem Einlass und dem Auslass stromaufwärts des oben erwähnten Knetwerkzeugs (13) angeordnet ist, wobei das zweite Werkzeug über Abstandshalter an der Welle befestigt ist, wobei das schraubenförmige Mischelement sich über eine virtuelle Mantelfläche eines virtuellen Zylinders erstreckt, wobei eine virtuelle Tangente an einer willkürlichen Position auf dem schraubenförmigen Mischelement einen Winkel von mehr als 45° mit der Welle einschließt.

## Revendications

1. Dispositif pour malaxer des aliments, lequel dispositif comprend un récipient (1) ayant une paroi de récipient (3), lequel récipient comprend au moins un arbre rotatif (5, 7) s'étendant sensiblement dans la direction longitudinale du récipient, une entrée située sur un premier côté de l'arbre rotatif (5, 7), à travers laquelle entrée les aliments à malaxer peuvent être introduits dans le récipient, ainsi qu'une sortie située sur le côté opposé de l'arbre (5, 7), espacé de l'entrée, à travers laquelle sortie les aliments malaxés peuvent être évacués du récipient (1), lequel arbre comprend au moins un outil doté d'au moins un élément de malaxage (13) qui entoure de manière hélicoïdale l'arbre, lequel élément de malaxage (13) est fixé à l'arbre par des entretoises (15), tandis que l'élément de malaxage qui entoure de manière hélicoïdale l'arbre s'étend sur une coque virtuelle (17) d'un cylindre virtuel, dans lequel une ligne tangente virtuelle comprend un angle constant (α) compris entre 0,5 et 10 degrés, avec l'arbre dans une position aléatoire sur l'élément de malaxage, **caractérisé en ce que** l'élément de malaxage (13) est constitué d'une barre (13) ayant un diamètre supérieur ou égal à ¼ du diamètre de l'arbre (5, 7) et **en ce que** l'espacement entre la paroi du récipient (1) et le cylindre virtuel défini par l'élément de malaxage (13) est égal ou inférieur à la moitié du diamètre de la barre (13).

2. Dispositif selon la revendication 1, **caractérisé en ce que** la barre (13) a un diamètre qui est approximativement égal à la moitié du diamètre de l'arbre (5, 7).

3. Dispositif selon l'une quelconque des revendications précédentes, **caractérisé en ce que** la longueur des entretoises (15) est égale ou inférieure au diamètre de la barre hélicoïdale et également égale ou inférieure à la moitié du diamètre de la barre hélicoïdale (13).

4. Dispositif selon l'une quelconque des revendications précédentes, **caractérisé en ce que** la longueur du cylindre virtuel est comprise entre 0,5 m et 5 m.

5. Dispositif selon l'une quelconque des revendications précédentes, **caractérisé en ce que** le diamètre de la barre (13) est d'au moins 15 mm.

6. Dispositif selon l'une quelconque des revendications précédentes, **caractérisé en ce que** le dispositif est agencé de façon à pouvoir être actionné dans un processus continu en cours d'utilisation.

7. Dispositif selon l'une quelconque des revendications précédentes, **caractérisé en ce que** l'arbre est doté d'un second outil équipé d'un élément de mélange qui entoure de manière hélicoïdale l'arbre, lequel second outil est disposé entre l'entrée et la sortie, en amont de l'outil de malaxage mentionné ci-dessus (13), lequel second outil est fixé à l'arbre par des entretoises, dans lequel l'élément de mélange hélicoïdal s'étend sur une coque virtuelle d'un cylindre virtuel, dans lequel une ligne tangente virtuelle comprend un angle de plus de 45 degrés avec l'arbre dans une position aléatoire sur l'élément de mélange hélicoïdal.
